(19) Europäisches Patentamt

European Patent Office

Office européen des brevets

(11) Publication number : **0 323 768 B1**

(12) # EUROPEAN PATENT SPECIFICATION

(45) Date of publication of patent specification :
**02.01.92 Bulletin 92/01**

(21) Application number : **88402925.7**

(22) Date of filing : **22.11.88**

(51) Int. Cl.⁵ : **F16F 13/00**

(54) Improved vibration absorber.

(30) Priority : **08.01.88 FR 8800158**

(43) Date of publication of application :
**12.07.89 Bulletin 89/28**

(45) Publication of the grant of the patent :
**02.01.92 Bulletin 92/01**

(84) Designated Contracting States :
**BE CH DE GB IT LI NL SE**

(56) References cited :
**EP-A- 0 223 712**
**EP-A- 0 255 434**
**CH-A- 577 126**
**FR-A- 1 383 386**
**FR-A- 2 218 508**
**FR-A- 2 572 338**

(73) Proprietor : **BARRY WRIGHT CORPORATION**
**1 Newton Executive Park**
**Newton Lower Falls Massachusetts 02162**
**(US)**

(72) Inventor : **Brumme, Reinhold**
**Spohrstrasse 5**
**W-6200 Wiesbaden (DE)**
Inventor : **Desons, Roger**
**21 rue du Maréchal Foch**
**F-78690 Les Essarts Le Roi (FR)**

(74) Representative : **Patentanwälte Grünecker,**
**Kinkeldey, Stockmair & Partner**
**Maximilianstrasse 58**
**W-8000 München 22 (DE)**

## Description

The invention concerns a vibration absorber intended to be disposed between two devices according to the precharacterizing part of claim 1.

Absorbers presenting this structure are already known. EP-A-223712 shows a vibration absorber, to be disposed between two devices of the type comprising a casing solid with one of said devices, two bell-shaped membranes of a resiliently deformable material mounted in coaxial relationship and axially aligned inside the casing with the tops thereof facing each other, and connected through their bases to said casing, and a rod intended to be solid with the other device, coaxially passing through said membranes and connected to same so that a relative motion of the rod with respect to the casing provokes a resilient deformation of at least one membrane, both membranes being solid with the rod at their tops, and their radially outer peripheral surfaces delimit a tight chamber inside the casing of a constant volume and which is filled with a liquid.

These absorbers provide an excellent damping at the upper frequencies, however, they present a major drawback that the amplitude of the vibrations at the resonance frequency is relatively high.

CH-A-577126 shows a vibration absorber which furthermore, comprises a sleeve-shaped means, which is coaxially mounted inside the casing, while being axially and radially solid with same, and wherein the membranes are tightly connected to the sleeve at their bases, and the tight chamber being formed between the membranes and the opposite peripheral face of said sleeve. The end of the sleeve located on the side of the outlet of the rod presents a shoulder radially projecting inwardly. The base of the corresponding membran is pressed against the front face of the shoulder of the sleeve and clamped between this face and the casing.

The object underlying the present invention is to provide a vibration absorber in which a relatively high amplitude of the vibrations at the resonance frequency is relatively high and which provides an excellent connection between the two membranes and the casing.

This object is achieved by the characterizing features of claim 1.

According to an advantageous feature of the invention the rod carries between both tops of the membranes an advantageously circular washer-shaped element which projects radially towards the interior of the chamber filled with a liquid.

According to another advantageous feature of the invention the liquid is silicon fluid.

The invention will be better understood and further objects, features, details and advantages thereof will appear more clearly as the following explanatory description proceeds with reference to the appended schematic drawings given by way of example only illustrating an embodiment of the invention, and wherein :

Figure 1 is a side view with axial half cross-section of an absorber according to the present invention ;

Figure 2 is a top view of the absorber of Figure 1; and

Figure 3 shows in the shape of curves the behaviour respectively of the absorber according to the invention and of a known absorber under the effect of predetermined excitation vibrations the frequency of which varies.

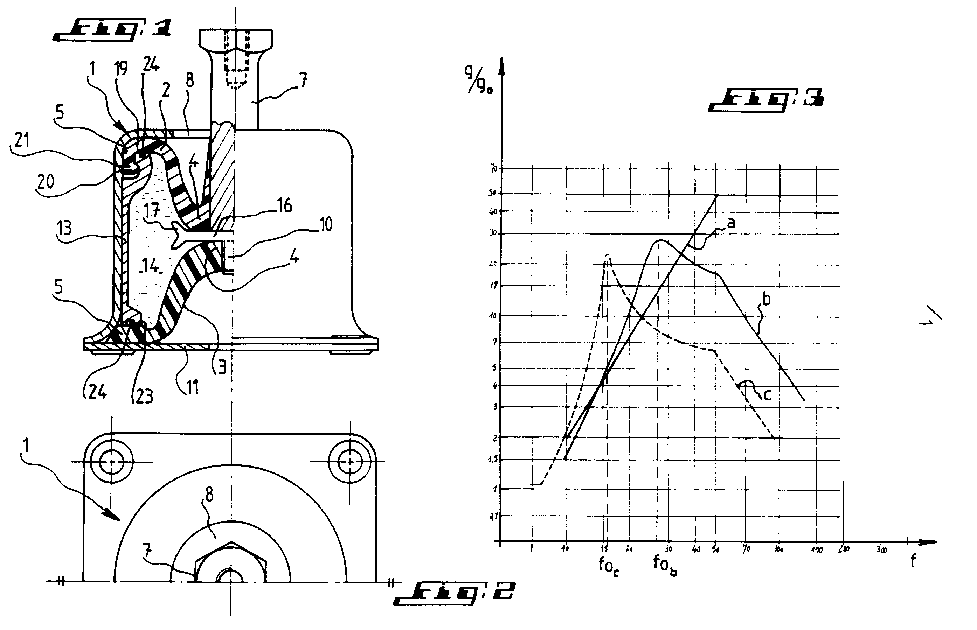

Referring to figures 1 and 2, it is seen that an absorber according to the invention comprises a closed cylindrical casing 1, made advantageously of an appropriate metallic material, two bell-shaped membranes 2, 3 of a resiliently deformable material, which are coaxially mounted and axially aligned inside the casing 1, with their tops 4 facing each other, and which are rendered solid with casing 1 through their bases 5, as well as a rod 7 which coaxially passes through both membranes 2 and 3 and which is solid with them. The upper front face of the casing 1 presents a central circular opening 8 through which the rod 7 extends outwards. At its inner end, the rod 7 is fixed to the membrane 3 by any appropriate means, e.g. by means of a threaded part with a lower diameter 10 co-operating with a corresponding axial threaded hole of this membrane or simply by means of a nut. The membrane 2 is fixed to the peripheral surface of the rod 7, by any known appropriate means. At its end opposite to the opening 8, the casing 1 is closed by a separate bottom 11. The absorber is likely to be inserted between two devices respectively fixed to the casing 1 and to the rod 7.

A sleeve 13 is coaxially mounted inside the casing 1 and the bases 5 of the membranes are fixedly fastened on their periphery, through clamping, between the ends of the sleeve 13 and the casing 1. As seen in Figure 1, the radially outer peripheral surfaces of membranes 2 and 3 and the radially inner surface of sleeve 13 delimit a tight circular chamber 14 filled with an appropriate liquid such as silicone fluid. As the membranes 2 and 3 are solid with the rod 7, the volume of chamber 14 is constant, irrespective of any relative motion between rod 7 and casing 1. Between the two tops 4 of the membranes, a circular washer-shaped means 16 is mounted in a fixed manner on rod 7 and projects radially towards the interior of chamber 14. The peripheral part of washer 16 is advantageously shaped so as to present a V-shaped profile which opens radially towards the interior of the chamber. The V-shaped part 17 can be made of a flexible material.

As shown in Figure 1, the upper membrane 2 is adapted in particular to be elongation stressed. To this end, the base 5 of membrane 2 is immobilized to avoid any wrenching. The upper end of sleeve 13 is radially shifted inwards so as to form an anchoring groove 20 in the radially outer face, near the front face 19. The base of membrane 2 includes an enlargement 21 through which it enters the groove 20 while being pressed against the front face 19 and clamped between the latter and the inner face of casing 1. The base 5 of the lower membrane 3, which in particular is compression stressed, is clamped between the lower end of sleeve 13 and the closing element 11 of casing 1. To improve the tightness of chamber 14 at the bases 5 of the membranes labyrinth seals shown at 24 are provided in the front faces 19 and 23 of the sleeve.

Concerning the membranes 2 and 3, they can be made of any appropriate resiliently deformable material. Elastomer membranes, e.g. silicone membranes are advantageously used. As to the liquid for filling the chamber 14, a fluid will be chosen whose sensitivity to temperature is low and which is of course chemically neutral with respect to the membrane-forming material. The silicone fluid exhibits very satisfactory properties. Advantageously, its viscosity is comprised between $6 \cdot 10^{-3}$ $m^2$/sec and $25 \cdot 10^{-3}$ $m^2$/sec (60 and 250 Stockes).

Figure 3 shows the advantage of an absorber according to the invention when compared to an absorber substantially having the same structure but having no tight chamber tilled with a liquid. Figure 3, wherein the abscissa and the ordinate indicate respectively the frequency f and the ratio between the acceleration g and the acceleration due to gravity go, illustrates the response of the absorbers to an excitation signal the evolution of which with respect to the frequency is shown by curve a. Up to the frequency of 50 Hz, the signal amplitude is constant and has a value of e.g. 0.5 mm. From this frequency of 50 Hz, it is the acceleration g which is maintained constant. The curve b shows the response of the absorber according to the invention whereas the curve c, in dotted line, shows the response of the known absorber. It is seen that at the resonance frequency $Fo_b$ of the absorber according to the invention the overtension coefficient nearly equals 2, this coefficient being formed of the ratio of the values of curves b and a at this resonance frequency $Fo_b$. For comparison, the known absorber of which the resonance frequency is indicated at $Fo_c$ presents an overtension coefficient of about 5. This means that the absorber according to the invention has an overtension coefficient which is 2.5 times lower than that of the known absorber having no chamber filled with a liquid. This advantageous result produced by the absorber according to the invention can be explained by the effect of friction through shearing of the liquid at the walls of the chamber. Besides, it is seen in Figure 3 that the presence of the liquid in the chamber 14 of the absorber according to the invention is not detrimental to the damping quality at the higher frequencies with respect to the known absorber. in both cases, the damping in the high frequency range is of 12 db/octave.

## Claims

1. Vibration absorber intended to be disposed between two devices, of the type comprising a casing (1) solid with one of the said devices, two bell-shaped membranes (2, 3) of a resiliently deformable material mounted in coaxial relationship and axially aligned inside the casing (1), with the tops thereof facing each other, and connected through their bases to the said casing, and a rod (7), intended to be solid with the other device, coaxially passing through the said membranes (2, 3) and connected to them so that a relative motion of the rod (7) with respect to the casing (1) provokes a resilient deformation of at least one membrane, both membranes (2, 3) being solid with the rod (7) at their tops (4), and their radially outer peripheral surfaces delimit a tight chamber (14) inside the casing (1), of a constant volume and which is filled with a liquid, a sleeve-shaped means (13) which is coaxially mounted inside the casing (1) while being axially and radially solid with the same, wherein the membranes (2, 3) are tightly connected to this sleeve, at their bases (5), the tight chamber (14) being formed between the membranes (2, 3) and the opposite peripheral face of said sleeve (13), the end of sleeve (13) located on the side of the outlet of rod (7) presenting a shoulder radially projecting inwardly, the base of the corresponding membran (2) being pressed against the front face (19) of the shoulder of the sleeve and being clamped between this face (19) and the casing (1), characterised in that a circular anchoring groove (20) is formed in the radially outer face of the shoulder of the sleeve, in which groove the corresponding membrane is inserted through a peripheral enlargement (21) on the base (5) of the membrane.

2. Absorber according to claim 1, **characterised in that**, the rod (7) carries between both tops (4) of the membranes (2, 3) an advantageously circular washer-shaped element (16) which projects radially towards the interior of the chamber (14) filled with a liquid.

3. Absorber according to one of claims 1 or 2, **characterised in that**, the liquid is silicone fluid.

4. Absorber according to one of claims 1 to 3, **characterised in that**, the other membrane is immobilized at its periphery, through insertion between the other front face (23) of the sleeve and the face (11) for radially closing the same.

5. Absorber according to one of claims 1 to 4, **characterised in that**, the front faces (19, 23) of sleeve (13) carry sealing elements, such as labyrinth seals (24).

6. Absorber according to one of claims 2 to 5,

characterised in that, the aforesaid washer (16) present a cylindrical surface (17) with a V-shaped profile which radially opens towards the interior of chamber (14).

7. Absorber according to claim 6, **characterised in that**, at least the radially outer part of the washer (16) is of a resilient material.

## Patentansprüche

1. Schwingungsdämpfer für die Anordnung zwischen zwei Vorrichtungen, von der Art mit einem Gehäuse (1), das verbunden ist mit einer der Vorrichtungen, zwei glockenförmigen Membranen (2, 3) von elastisch verformbarem Material, die koaxial zueinander und axial ausgerichtet innerhalb des Gehäuses (1) angeordnet sind, wobei deren Spitzen einander gegenüberliegen, und die durch ihre Phasen mit dem Gehäuse verbunden sind, und einer Stange (7), die mit der anderen Vorrichtung verbunden ist, wobei sie koaxial durch die Membranen (2, 3) hindurchgeht und mit ihnen verbunden ist, so daß eine relative Bewegung der Stange (7) bezüglich des Gehäuses (1) eine elastische Verformung wenigstens einer Membran hervorruft, wobei beide Membranen (2, 3) mit der Stange (7) an ihren Spitzen (4) verbunden sind, und deren radiale äußere Umfangsoberflächen eine dichte Kammer (14) innerhalb des Gehäuses (1) begrenzen, die ein konstantes Volumen aufweist, und mit einer Flüssigkeit gefüllt ist, einer hülsenförmigen Einrichtung (13), die koaxial innerhalb des Gehäuses (1) angeordnet ist, während sie axial und radial mit diesem verbunden ist, wobei die Membranen (2, 3) fest an ihren Grundflächen (5) mit der Hülse verbunden sind, wobei die dichte Kammer (14) zwischen den Membranen (2, 3) und gegenüber der Umfangsseite des Gehäuses (13) ausgebildet ist, wobei das Ende der Hülse (13), die auf der Seite des Auslasses der Stange (7) angeordnet ist, eine radial nach innen vorspringende Schulter aufweist, wobei die Basis der entsprechenden Membran (2) gegen die Vorderseite (19) der Schulter der Hülse gedrückt wird und zwischen diese Seite (19) und dem Gehäuse (1) eingeklemmt wird, **dadurch gekennzeichnet**, daß eine kreisförmige Ankernut (20) in der radialen äußeren Seite der Schulter der Hülse ausgebildet ist, wobei in die Nut die entsprechende Membran eingesetzt wird durch eine Umfangsvergrößerung (21) an der Grundfläche (5) der Membran.

2. Schwingungsdämpfer nach Anspruch 1, **dadurch gekennzeichnet**, daß die Stange (7) zwischen beiden Spitzen (4) der Membranen (2, 3) ein vorzugsweise kreisförmiges scheibenförmiges Element (16) trägt, das radial in das Innere der Kammer (14), die mit einer Flüssigkeit gefüllt ist, vorspringt.

3. Schwingungsdämpfer nach Anspruch 1 oder 2,

dadurch gekennzeichnet, daß die Flüssigkeit ein Silikonfluid ist.

4. Schwingungsdämpfer nach einem der Ansprüche 1 bis 3, **dadurch gekennzeichnet,** daß die andere Membran an ihrem Umfang unbeweglich ist, durch Einführen in die andere Vorderseite (23) der Hülse und die Seite (11) zum radialen Schließen derselben.

5. Schwingungsdämpfer nach einem der Ansprüche 1 bis 4, **dadurch gekennzeichnet**, daß die Vorderseiten (19, 23) der Hülse (13) Dichtungselemente tragen, wie beispielsweise Labyrinthdichtungen (24).

6. Schwingungsdämpfer nach einem der Ansprüche 2 bis 5, **dadurch gekennzeichnet**, daß die vorgenannte Scheibe (16) einen zylindrische Oberfläche (17) aufweist mit einem V-förmigen Profil, das radial sich nach dem Inneren der Kammer (14) öffnet.

7. Schwingungsdämpfer nach Anspruch 6, **dadurch gekennzeichnet**, daß wenigstens der radial äußere Teil der Scheibe (16) aus einem elastischen Material gebildet ist.

## Revendications

1. Amortisseur de vibrations, destiné à se disposer entre deux dispositifs, du type comprenant un logement (1) solidaire de l'un de ces dispositifs, deux membranes en forme de cloche (2, 3) formées d'une matière déformable élastiquement et montées en relation coaxiale et en alignement axial à l'intérieur du logement (1), les parties supérieures de ces membranes se faisant face, ces membranes étant reliées par leurs bases au logement susdit, et une tige (7) destinée à être solidaire de l'autre dispositif, en traversant coaxialement les membranes susdites (2, 3) et reliée à ces membranes de manière qu'un déplacement relatif de la tige (7) par rapport au logement (1) provoque une déformation élastique d'au moins une membrane, les deux membranes (2, 3) étant solidaires de la tige (7) à leurs parties supérieures (4), leurs surfaces périphériques, extérieures en direction radiale, délimitant une chambre étanche (14) à l'intérieur du logement (1), cette chambre étant d'un volume constant et étant remplie d'un liquide, un dispositif en forme de manchon (13) qui est monté coaxialement à l'intérieur du logement (1), tout en étant solidaire axialement et radialement de celui-ci, les membranes (2, 3) étant reliées de manière étanche à ce manchon à leurs bases (5), la chambre étanche (14) étant formée entre les membranes (2, 3) et la face périphérique opposée du manchon (13), l'extrémité du manchon (13), localisée du côté de la sortie de la tige (7), présentant un épaulement formant une saillie radiale vers le haut, la base de la membrane (2) correspondante étant pressée contre la face avant (19) de l'épaulement du manchon et étant serrée entre cette face (19) et le logement (1), cet amortisseur étant caractérisé en ce qu'une rainure d'ancrage circulaire (20) est formée dans la face, extérieure en direction radiale, de l'épaulement du manchon, rainure dans laquelle la membrane correspondante est induite par l'intermédiaire d'un agrandissement périphérique (21) prévu sur la base (5) de la membrane.

2. Amortisseur suivant la revendication 1, caractérisé en ce que la tige (7) porte, entre les deux surfaces supérieures (4) des membranes (2, 3), un élément en forme de rondelle (16) avantageusement circulaire, qui se présente en saillie radiale vers l'intérieur de la chambre (14) remplie d'un liquide.

3. Amortisseur suivant l'une des revendications 1 et 2, caractérisé en ce que le liquide est un fluide de silicone.

4. Amortisseur suivant l'une quelconque des revendications 1 à 3, caractérisé en ce que l'autre membrane est immobilisée à sa périphérie, par introduction entre l'autre face avant (23) du manchon et la face (11) en vue d'une fermeture radiale.

5. Amortisseur suivant l'une quelconque des revendications 1 à 4, caractérisé en ce que les faces avant (19, 23) du manchon (13) portent des éléments d'étanchéité, tels que des joints en labyrinthe (24).

6. Amortisseur suivant l'une quelconque des revendications 2 à 5, caractérisé en ce que la rondelle précitée (16) présente une surface cylindrique (17) présentant un profil en forme de V, qui s'ouvre radialement vers l'intérieur de la chambre (14).

7. Amortisseur suivant la revendication 6, caractérisé en ce qu'au moins la partie, se situant radialement vers l'extérieur, de la rondelle (16) est faite d'une matière élastique.

Fig.1

Fig.2

Fig.3